# EUROPEAN PATENT APPLICATION

(11) **EP 4 807 614 A1**
(43) Date of publication of application: **16.09.2026**
(21) Application number: 25163297.2
(22) Date of filing: 12.03.2025
(51) Int. Cl.: G06F 40/18

(54) **METHOD FOR VISUALIZING DATA FLOW AND SHEET DEPENDENCIES IN A SPREADSHEET**

(71) Applicant: Abelian Group AB, 129 30 Stockholm (SE)
(72) Inventor: LESKELÄ, Hannes Alexander, 167 45 Bromma (SE); ODEN RAPPORT, Nils Benjamin, 129 30 Hägersten (SE); SOLBERG HAMNVIK, Eirik, 1386 Asker (NO)
(74) Representative: Zacco Sweden AB

(57) **Abstract**

The disclosed technology relates at least to a computer-implemented method (100) for visualizing data flow and sheet dependencies in a spreadsheet of a spreadsheet editor. The spreadsheet comprises a plurality of data sheets, each data sheet comprising a plurality of cells arranged in a structured grid. The method (100) comprises the steps of: for each data sheet of the plurality of data sheets: retrieving (S102) cell data associated with each of the plurality of cells of said data sheet, processing (S104) the cell data of at least a subset of the plurality of cells to identify data indicative of cross-sheet dependencies between said data sheet and any of the remaining data sheets; and attributing (S106) one of a set of predefined sheet categories to said data sheet, based on the identified data indicative of cross-sheet dependencies; and displaying (S110), via a display device, a graphical user interface comprising graphical elements representing the plurality of data sheets according to their respective attributed sheet category.

## Description

### TECHNICAL FIELD

The present invention relates generally to a computer-implemented method for visualizing data flow and sheet dependencies in a spreadsheet of a spreadsheet editor.

### BACKGROUND ART

Spreadsheets are widely used in various industries for data analysis, financial modelling, project management, and other complex computational tasks. Popular spreadsheet editors include Microsoft Excel, Google Sheets, and LibreOffice Calc.

Spreadsheet editors are versatile tools used for organizing data in rows and columns, making it easy to sort, filter, and manage large datasets. They allow users to perform complex calculations with built-in functions and formulas, ranging from simple arithmetic to advanced statistical analysis. Additionally, users can create charts, graphs, and pivot tables to visualize data trends and patterns. Features like macros and scripting enable automation of repetitive tasks, saving time and reducing errors. Modern spreadsheet editors also support real-time collaboration, allowing multiple users to work on the same document simultaneously and track changes.

Over time, these spreadsheets often become intricate, containing numerous interconnected formulas, hidden dependencies, and large datasets. When a new user inherits a complex spreadsheet-whether from a colleague, a predecessor, or an external source-understanding its structure and functionality can be time-consuming and error-prone.

More specifically, the structure of the spreadsheet might be complex, with numerous interconnected sheets, extensive use of formulas, and intricate data relationships. This complexity can make it difficult to trace how data flows and how calculations are performed.

Moreover, the documentation within the spreadsheet is often insufficient or non-existent. Without clear explanations or annotations, new users may struggle to understand the purpose of certain cells, formulas, or data ranges. This lack of context can lead to confusion and errors.

Furthermore, spreadsheets may contain custom macros or scripts that automate specific tasks. If these scripts are not well-documented or if the new user is unfamiliar with the programming language used, it can be challenging to understand and modify them as needed.

Additionally, spreadsheets can suffer from inconsistent data entry and formatting. Variations in how data is entered or formatted can make it difficult to analyse and interpret the information accurately. This inconsistency can also lead to errors in calculations and reporting.

Lastly, spreadsheets that have been used and modified by multiple people over time may have accumulated errors, redundant data, and outdated information. This can create a cluttered and confusing environment for new users, making it hard to identify what is current and relevant.

Traditional methods for deciphering spreadsheets include manual inspection, reviewing formula dependencies using built-in tools, or consulting with the original creator-if available. However, these approaches are inefficient, especially for large and highly interdependent spreadsheets. Existing solutions, such as cell-tracing functions and formula auditing tools, provide limited insights and require significant user effort to piece together a holistic understanding of the spreadsheet's purpose and mechanics.

Accordingly, there is a need for an improved method of assisting users in quickly and efficiently understanding the structure, logic, and dependencies of complex spreadsheets. Such a solution should enable users to grasp data flow, dependencies between different sheets, critical data points, and functional components with minimal effort, thereby reducing onboarding time and the risk of misinterpretation.

### SUMMARY OF THE INVENTION

The disclosed technology seeks to mitigate, alleviate or eliminate one or more of the above-identified deficiencies and disadvantages in the prior art to address various problems relating to aiding a user in getting a better understanding of how a spreadsheet works, and in particular for visualizing data flow and dependencies in a spreadsheet. In the long term, the disclosed technology can improve the way spreadsheet users work with data as they can be made aware of how their spreadsheets are constructed, and how they may be improved to better align with good practices.

Various aspects and embodiments of the disclosed technology are defined below and in the accompanying independent and dependent claims.

According to a first aspect, there is provided a computer-implemented method for visualizing data flow and sheet dependencies in a spreadsheet of a spreadsheet editor. The spreadsheet comprises a plurality of data sheets, each data sheet comprising a plurality of cells arranged in a structured grid. The method comprises, for each data sheet of the plurality of data sheets, retrieving cell data associated with each of the plurality of cells of said data sheet, processing the cell data of at least a subset of the plurality of cells to identify data indicative of cross-sheet dependencies between said data sheet and any of the remaining data sheets; and attributing one of a set of predefined sheet categories to said data sheet, based on the identified data indicative of cross-sheet dependencies. The method further comprises displaying, via a display device, a graphical user interface comprising graphical elements representing the plurality of data sheets according to their respective attributed sheet category. With this aspect of the disclosed technology, similar advantages and preferred features are present as in the other aspects.

According to a second aspect, there is provided a computer program product comprising instructions which when the program is executed by a computing device, causes the computing device to carry out the method according to any embodiment of the first aspect. According to an alternative embodiment of the second aspect, there is provided a (non-transitory) computer-readable storage medium. The non-transitory computer-readable storage medium stores one or more programs configured to be executed by one or more processors of a processing system, the one or more programs comprising instructions for performing the method according to any embodiment of the first aspect. With this aspect of the disclosed technology, similar advantages and preferred features are present as in the other aspects.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

According to a third aspect, there is provided a computing device for visualizing data flow and sheet dependencies in a spreadsheet of a spreadsheet editor. The spreadsheet comprises a plurality of data sheets, each data sheet comprising a plurality of cells arranged in a structured grid. The computing device comprises control circuitry. The control circuitry is configured to, for each data sheet of the plurality of data sheets: retrieve cell data associated with each of the plurality of cells of said data sheet, process the cell data of at least a subset of the plurality of cells to identify data indicative of cross-sheet dependencies between said data sheet and any of the remaining data sheets; and attribute one of a set of predefined sheet categories to said data sheet, based on the identified data indicative of cross-sheet dependencies. The control circuitry is further configured to display, via a display device, a graphical user interface comprising graphical elements representing the plurality of data sheets according to their respective attributed sheet category. With this aspect of the disclosed technology, similar advantages and preferred features are present as in the other aspects.

A possible associated advantage of the disclosed technology is that it can enhance data management by identifying and categorizing cross-sheet dependencies, allowing users to better understand how data flows between different sheets. This is particularly useful for managing complex spreadsheets more efficiently. Additionally, it improves error detection by analysing cell data to identify dependencies, which helps in detecting errors or inconsistencies in data flow. This is especially beneficial for large spreadsheets where manual error checking is impractical.

A possible associated advantage of the disclosed technology is that it can assist users of any spreadsheet editor in streamlining workflows by categorizing sheets based on their dependencies, enabling users to quickly identify related sheets and understand their interactions. This makes it easier to navigate and update the spreadsheet. The graphical user interface displaying the categorized sheets provides visual clarity, offering a clear representation of the spreadsheet's structure and making it easier for users to comprehend complex data relationships at a glance.

A possible associated advantage of the disclosed technology is that it provides for time savings, as automating the process of retrieving, analysing, and categorizing cell data saves time compared to manual methods. Users can focus on higher-level tasks rather than getting bogged down in data management details. The method is also scalable, capable of handling spreadsheets with a large number of sheets and cells, ensuring that data flow and dependencies remain clear and manageable even as the spreadsheet grows.

Moreover, by visualizing dataflow and direction, the user can improve the way they work with data. The disclosed technology can drive users to, already when creating new spread sheets, consider the data structure and create better more easily verified data models. For example, by avoiding circular data flow or mixing source data with heavy calculations on the same sheet.

It is also conceivable that the disclosed technology enhances collaboration in team environments. Having a clear visualization of data dependencies helps team members understand each other's work better, improving coordination and reducing the risk of conflicting changes. Overall, this method provides a comprehensive solution for managing and visualizing data flow and dependencies in spreadsheets.

In summary, the disclosed technology provides means of making also quite complicated and advanced spreadsheets more user-friendly and accessible, enabling users to save time and increase the quality of their work.

A possible associated advantage of the disclosed technology is that it can ensure that the categorization is tailored to the unique functionalities and features of the spreadsheet software being used, by comparing cell data with predefined data processing commands specific to the spreadsheet editor. This customization enhances the accuracy and relevance of the categorization process.

Additionally, attributing a predetermined cell category to cells that match predefined data processing commands allows for a more organized and systematic approach to data management. This categorization helps in quickly identifying and grouping cells based on their functions and roles within the spreadsheet, making it easier to understand and manage the data.

Even further, by focusing on a subset of cells with relevant attributed categories, the disclosed technology can efficiently identify data indicative of cross-sheet dependencies. This targeted approach can reduce the complexity and computational load, as it narrows down the analysis to only the most pertinent cells, rather than processing all cells indiscriminately.

Yet another advantage may be that additional information or characteristics of the data sheets can be displayed, such as hidden data sheets, external data sources, circular data flow, errors, and risk formulas, to even further assist the user.

Overall, some embodiments of the disclosed technology can enhance the precision and efficiency of data flow visualisation and dependency analysis in spreadsheets, leading to better data management, improved error detection (e.g. in the structure or dependencies between sheets, or in cell formulas), and streamlined workflows.

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

These and other features and advantages of the disclosed technology will in the following be further clarified with reference to the embodiments described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:
Figure 1 is a schematic flowchart representation of a method, in accordance with some embodiments;
Figure 2 is a schematic illustration of a computing device, in accordance with some embodiments;
Figure 3 illustrates, by way of example, a spreadsheet in a spreadsheet editor;
Figure 4 illustrates, by way of example, a graphical user interface, in accordance with some embodiments.

### DETAILED DESCRIPTION

The present disclosure will now be described in detail with reference to the accompanying drawings, in which some example embodiments of the disclosed technology are shown. Those skilled in the art will appreciate that the steps, services and functions explained herein may be implemented using individual hardware circuitry, using software functioning in conjunction with a programmed microprocessor or general-purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It will also be understood that, although the term first, second, etc. may be used herein to describe various elements or features, these elements should not be limited by these terms. These terms are only used to distinguish one element from another. For example, a first sheet could be termed a second sheet, and, similarly, a second sheet could be termed a first sheet, without departing from the scope of the embodiments. The first sheet and the second sheet are both sheets, but they are not the same sheet.

As used herein, the wording "one or more of" a set of elements (as in "one or more of A, Band C" or "at least one of A, Band C") is to be interpreted as either a conjunctive or disjunctive logic. Put differently, it may refer either to all elements, one element or combination of two or more elements of a set of elements. For example, the wording "one or more of A, B and C" may be interpreted as A or B or C, A and Band C, A and B, Band C, or A and C.

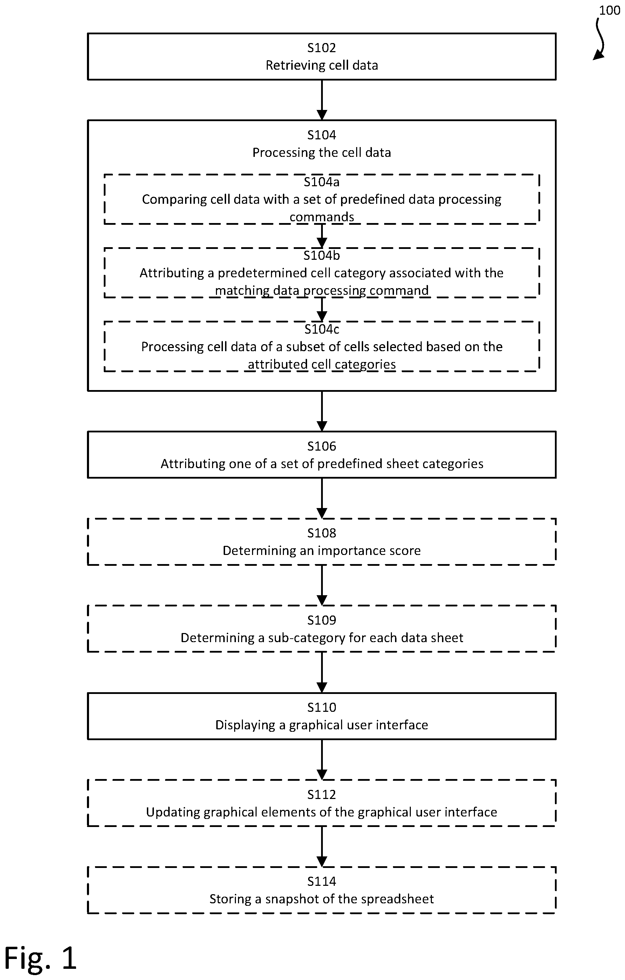

Figure 1 is a schematic flowchart representation of a computer-implemented method 100 for visualizing data flow and sheet dependencies in a spreadsheet of a spreadsheet editor. The spreadsheet editor can herein be understood as any software application that provides a user an interface for creating, modifying, and managing spreadsheets. It enables users to enter and manipulate data in a structured grid format, apply formulas, and perform various data analysis functions. Some common examples of spreadsheet editors include Microsoft Excel, Google Sheets, and LibreOffice Calc.

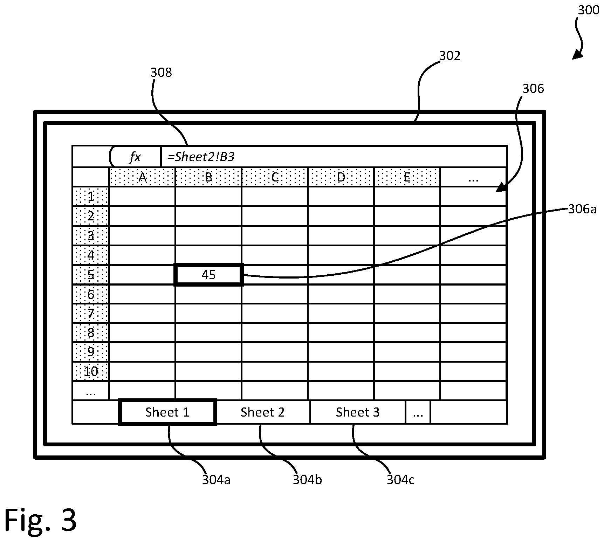

Fig. 3 illustrates, by way of example, a spreadsheet 302 of a spreadsheet editor 300. The spreadsheet comprises a plurality of data sheets (or just "sheets"). In the illustrated example, the spreadsheet comprises a first sheet 304a, denoted "Sheet 1", a second sheet 304b, denoted "Sheet 2", and a third sheet 304c, denoted "Sheet 3". It is however to be noted that the spreadsheet 302 may comprise any number of data sheets. Moreover, a data sheet may be an internal data sheet of the spreadsheet, or an external data sheet.

In turn, each data sheet comprises a plurality of cells 306, arranged in a structured grid. In the illustrated example, Sheet 1 is the active sheet (i.e. the sheet that it currently shown to the user on a display). The plurality of cells 306 are arranged in the structured grid as a number of columns and rows. Each cell can thus be referenced by a unique row and column reference. As an example, the cell denoted by 306 can be referenced by "B5". Each cell may have some kind of cell content. The cell content may comprise raw data (e.g. numeric values, text strings, dates, or other user-inputted content). The cell content may comprise a formula or function, such as expressions that perform calculations or operations based on the values of other cells (e.g. arithmetic operations, logical comparisons, statistical analysis, financial calculations, etc.), or some other predefined computational routine. The cell content may comprise references or links to other cells within the same data sheet, across different data sheets of the same spreadsheet, or across different spreadsheets. As an example, the cell 306a has the assigned numerical value 45. Looking at the cell content field 308 (or function field), this value is retrieved from a cell with reference B3 in the second data sheet 304b denoted Sheet 2. The cell content may comprise embedded objects, such as graphical elements, charts, or interactive controls (e.g., dropdown lists, buttons) that enhance data presentation and interaction. Each cell may further have associated meta data, indicating one or more additional attributes, of the cells, or their content. Examples of such attributes include but are not limited to parent sheet, precedents and dependents, cell formula as text, cell formula as a value as seen by the spreadsheet editor, a relationship to its neighbors (e.g. in the context of whether they are part of a formula, a table, referenced as a hyper link or part of a named range group), and/or whether the cell belongs to a pivot table of the spreadsheet. In the following, the term cell data is used to refer to any data associated with a given cell. The cell data may thus encompass both explicit cell contents, but also meta data associated with the cell.

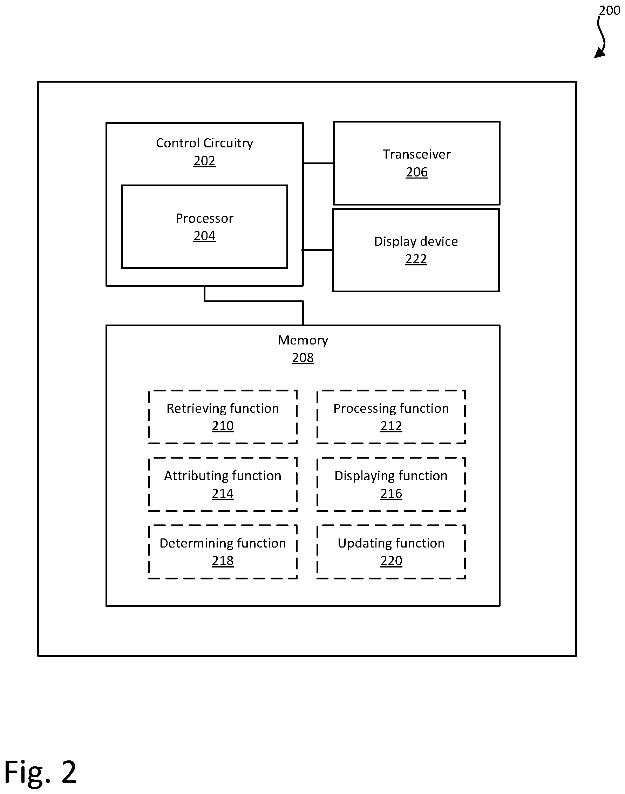

The method 100 can be performed by a general computing device, such as a personal computers and laptops. But it may also be performed in the cloud, i.e. on cloud or web-based platforms or servers, and be accessible via web-browsers. More specifically, the method 100 may be performed by a processing system of the computing device. The processing system may for example comprise one or more processors and one or more memories coupled to the one or more processors, wherein the one or more memories store one or more programs that perform the steps, services and functions of the method 100 disclosed herein when executed by the one or more processors. Such a computing device 200 is further described below in connection with Fig. 2.

Below, the different steps of the method 100 are described in more detail. Even though illustrated in a specific order, the steps of the method 100 may be performed in any suitable order as well as multiple times. Thus, although Fig. 1 may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the invention. Likewise, software implementations could be accomplished with standard programming techniques with rule-based logic and other logic to accomplish the various steps. Further variants of the method 100 will become apparent from the present disclosure. The herein mentioned and described embodiments are only given as examples and should not be limiting to the present invention. Other solutions, uses, objectives, and functions within the scope of the invention as claimed below described patent claims should be apparent for the person skilled in the art.

It should also be appreciated that the method 100 of Fig. 1 comprises some steps which are illustrated as boxes in solid lines and some steps which are illustrated in dashed lines. The steps which are shown in solid lines are steps which are comprised in the broadest example embodiment of the method 100. The steps which are comprised in dashed lines are examples of a number of optional steps which may form part of a number of alternative embodiments. It should be appreciated that the optional steps need not be performed in order. Furthermore, it should be appreciated that not all of the steps need to be performed. The example steps may be performed in any order and in any combination. For example, the method 100 may optionally comprise the step denoted S108. Alternatively, or in combination with step S108, the method may optionally comprise the step denoted S112. Alternatively, or in combination with step S108 and or S112, the method may optionally comprise the sub-steps denoted S104a to S104c.

As will be further elaborated upon in the following, the method 100 comprises performing a number of steps (in the following denoted S102 to S109) for each data sheet of the plurality of data sheets.

More specifically, the method 100 comprises retrieving S102, for each data sheet, cell data associated with each of the plurality of cells of said data sheet. As mentioned above, the cell data may comprise any information associated with a given cell, including e.g. the cell content and other meta data associated with the cell. The cell data may e.g. be retrieved through accessing an Application Programming Interface (API) of the spreadsheet editor.

The method 100 further comprises processing S104 the cell data of at least a subset of the plurality of cells to identify data indicative of cross-sheet dependencies between said data sheet and any of the remaining data sheets. In other words, cross-sheet dependencies may be identified between the plurality of data sheets, by analyzing the cell data of some, or all, of the cells of the data sheets.

A cross-sheet dependency (or just "sheet dependency") of a present data sheet to another data sheet may comprise a link (or reference) between one or more cells of the present data sheet and one or more cells of the other data sheet. The link may either be an ingoing link in relation to the present data sheet. In other words, the present data sheet may receive data from the other data sheet through the ingoing link. Alternatively, the link may be an outgoing link in relation to the present data sheet. In other words, the present data sheet may send data to the other data sheet through the outgoing link.

Processing S104 the retrieved cell data may comprise the following sub-steps, denoted S104a-S104c. First, comparing S104a the cell data of each cell of the plurality of cells with a set of predefined processing commands specific to the spreadsheet editor. The predefined processing commands may e.g. be pre-programmed functions or formulas available in the spreadsheet editor. As an example, such a function may be lookup-functions, match-functions, index-functions, etc. which can contain direct references to other sheets. Second, provided that the cell data of a cell matches any predefined data processing command (i.e. of the set of predefined data processing commands), attributing S104b a cell category associated with the matching data processing command to the cell of matching cell data. Third, selecting a subset of cells of the plurality of cells to be processed S104, based on the attributed cell category of each cell. Put differently, only a subset of the cells of a present data sheet needs to be processed, to identify the data indicative of cross-sheet dependencies. More specifically, only those cells which are believed to be of relevance for identifying cross-sheet dependencies.

Alternatively, or in combination with the above, the subset of cells to be processed may be selected based on other attributes of the cells. More generally, the cells of a data sheet may be classified in different cell categories based on their respective cell data. Thereby, cells of no or low value, such as empty cells, or cells that contain just raw data, can be omitted in the step of processing S104 the cell data to identify cross-sheet dependencies. The cell categories may e.g. be indicative of a type of cell, the cell content, etc. Thereby, the required computational resources can be reduced. Moreover, the cells may be sorted according to their category and processed in order or relevance.

In some embodiments, the cell data (and in particular the cell content) is retrieved in string format. It may then later be processed S104 in the string format. Processing the cell data in string format may be advantageous, e.g. compared to processing the cell data in a built-in format of the spread sheet editor, in that it can be done more efficiently, or at a higher processing speed. This can be particularly advantageous when processing large spreadsheets (i.e. with many data sheets and/or many active cells). In some embodiments, the cell data (comprising both the cell content and additional meta data) can be formulized into a defined cell object, for representing the cell. Processing S104 the cell data may thus be performed by processing the cell objects representing the plurality of cells. The defined cell object representation may be advantageous over built-in formats of the spread sheet editors e.g. in that it provides a more complete view of the available information relevant for identifying the cross-sheet dependencies. The built-in formats are typically incomplete, e.g. in terms of failing to indicate if the cell is used in a different context, for instance a named range or a pivot table. By creating these defined cell objects, such information can be added to a cell, which can lead to faster processing of how cells, sheets or other objects are used.

Processing S104 the cell data to identify cross-sheet dependencies may further comprise a check to verify that an appeared cross-sheet dependency refers to an actual data sheet of the spreadsheet. For example, a name of a data sheet identified in cell data may be checked against a list of names of the data sheets of the spreadsheet. This may help to reduce potential errors in referring to non-existing data sheets.

The method 100 further comprises attributing S106 one of a set of predefined sheet categories to said data sheet, based on the identified data indicative of cross-sheet dependencies. In other words, each data sheet may be assigned a sheet category in view of the data indicative of cross-sheet dependencies.

The set of predefined sheet categories may comprise a source sheet category, an analysis sheet category, and an output sheet category. A data sheet classified as a source sheet can be characterized by serving as a source of information to other data sheets. A data sheet classified as an output sheet can be characterized by serving as a final layer of the spreadsheet, which received data from other sheets, but does not send any data further. Lastly, a data sheet classified as an analysis sheet can be characterized by having both inputs and outputs of data. An analysis sheet may thus have inputs from source sheets and/or from other analysis sheets, and outputs sheets and/or other analysis sheets. Presenting the user with the different categories attributed to each data sheet can assist the user in better understanding the workings of the spreadsheet. In this regard, output sheets can be important to understand as they are the last sheets of the data flow, meaning they likely contain important conclusions or summaries. An input sheet can be important to understand from the perspective of knowing what data serves as the basis for the conclusions. Lastly, an analysis sheet may contain information relevant for understanding how things are connected, and how the results in the output sheets are formed. In conclusion, presenting this information about sheet categories can be directly linked to time savings and more efficient processes of working with spreadsheets.

More specifically, a data sheet may be attributed S106 the source sheet category provided that the data indicative of cross-sheet dependencies indicates solely outgoing links in said data sheet. Further, a data sheet may be attributed S106 the output sheet category provided that the data indicative of cross-sheet dependencies indicates solely ingoing links in said data sheet. Furthermore, a data sheet may be attributed S106 the analysis sheet category provided that the data indicative of cross-sheet dependencies indicates both ingoing links and outgoing links in said data sheet.

The set of predefined sheet categories may further comprise an independent sheet category. A data sheet classified as an independent sheet can be characterized by having no links to other data sheets. More specifically, a data sheet may be attributed S106 the independent sheet category provided that the data indicative of cross-sheet dependencies indicates no dependencies of said data sheet. Independence of a sheet may be of relevance for the user in knowing which data sheets may be removed or edited without affecting other data sheets.

The method 100 may further comprise determining S109 one or more sub-categories, for each data sheet of the plurality of data sheet. The sub-category may be determined S109, based on the cell data of the plurality of cells of the respective data sheet. More specifically, the sub-category S109 may be determined S109 based on meta data associated with the cells. The graphical user interface may then further comprise graphical elements representing the sub-categories of each data sheet. The sub-categories may e.g. be a hidden sheet category. The sub-categories may e.g. be an internal sheet category and an external sheet category. A data sheet may be an internal sheet if it is part of the spreadsheet. A data sheet may be an external sheet if it constitutes an external data source.

Alternatively, or in combination, the sub-categories may indicate whether a data sheet has any errors, risk formulas, legacy formulas, and/or circular data flow. Errors in a data sheet may arise e.g. from incorrect formula syntax, invalid operations, or erroneous cell or sheet references. Risk formulas may e.g. refer to formulas which mix fixed values and functions. Legacy formulas may be understood as older/outdated formula syntax or function, that has been replaced or improved in newer versions of spreadsheet editors. Circular data flow (or circular dependencies) between two data sheets (sheet A and sheet B) may occur when formulas in sheet A refer to values in sheet B, while formulas in sheet B also refers to values in sheet A, thus creating a loop of data flow. Circular data flow reduces the spreadsheet's reliability and is therefore important to visualize.

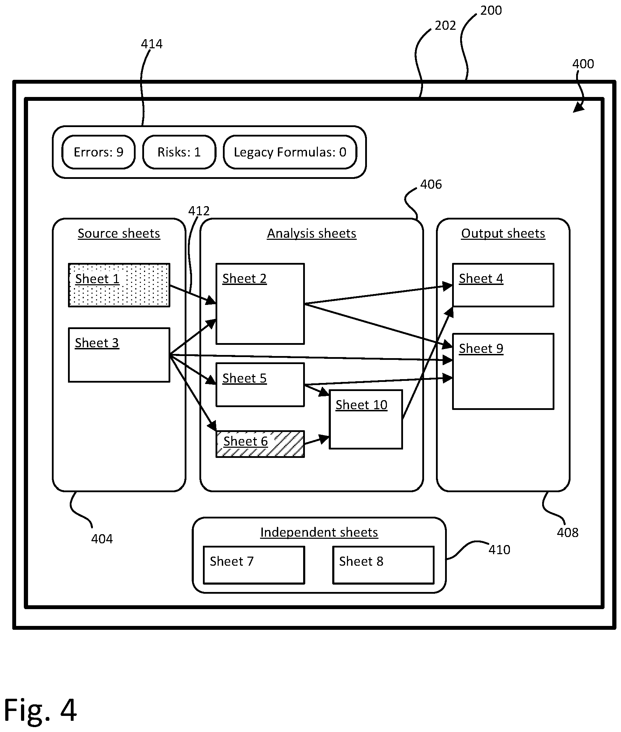

The method 100 further comprises displaying S110, via a display device, a graphical user interface comprising graphical elements representing the plurality of data sheets according to their respective attributed sheet category. As an example, each data sheet may be displayed as a graphical element under its respective sheet category. In another example, each data sheet may be represented as a graphical element, color-coded according to their respective sheet category. An example of the graphical user interface is shown, and further explained below, in connection with Fig. 4.

The graphical elements may further represent the links between the plurality of data sheets according to the data indicative of the data sheet dependencies. Moreover, the links may be represented in accordance with the type of link (i.e. ingoing or outgoing link). In other words, the direction of the link (or direction of data flow through the link) can be visualized by the graphical elements. This may e.g. be represented by arrows, as illustrated in the example of Fig. 4. However, other ways of visualizing the direction of a link are also applicable.

The graphical user interface may further comprise interactive elements enabling a user to explore data flow by selecting a data sheet or a link between two data sheets. More specifically, the interactive elements may allow the user to explore the reasons behind the cross-sheet dependencies and data flow. For example, the user may be able to click (or select) a link between two sheets, and the graphical user interface may be modified to highlight which cells in the two sheets are connected to each other.

The method 100 may further comprise determining S108 an importance score of each data sheet. The graphical elements may then further represent the importance score of each of the plurality of data sheets. As an example, the importance score may be represented by displaying the different sheets in different sizes depending on the importance score. For example, the bigger the size, the higher the relevance score.

The importance score may be determined S108 based on the data indicative of cross-sheet dependencies of said sheet. For example, a data sheet may be assigned a higher importance score, the more cross-sheet dependencies the sheet has. Additionally, or in combination, the importance score may reflect a ratio between ingoing links and outgoing links of a data sheet. Other measures of the importance of a data sheet may be used as well. For example, data indicative of historical user activity of the spreadsheet may be reflected in the importance score.

The method 100 may further comprise updating S112 the graphical elements in response to modifications in the spreadsheets, so to reflect a change of sheet category of one of more data sheets of the plurality of data sheets. Modifications in this sense may e.g. be changes to formulas or other cell contents, changes in sheet structures or the structure of the spreadsheet, etc. The modifications may be such that changes in sheet dependency or data flow of the spreadsheet is changed. By updating the graphical elements to display the changes, it can be visualized to a user of the spreadsheet what effects their changes have on the data flow and sheet dependencies, and more particularly what effect it has to the categorization of the data sheets.

The method 100 may further comprise storing S114 a snapshot of the spreadsheet comprising the data indicative of cross-sheet dependencies within the spreadsheet, in response to detecting modifications being made to the spreadsheets. Additionally, information indicative of which user makes the modifications, what modifications have been made, and at what time, may be stored. Put differently, a log of the data flow and sheet dependencies of the spread sheet may be monitored and stored over time. This may provide for version control of the spreadsheet.

Executable instructions for performing these functions are, optionally, included in a non-transitory computer-readable storage medium or other computer program product configured for execution by one or more processors.

In general terms, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

Figure 2 is a schematic illustration of a computing device 200, in accordance with some embodiments of the disclosed technology. The computing device 200 may be configured to perform the method 100 as described in connection with Fig. 1. Thus, the computing device 200 is a computing device for visualizing data flow and sheet dependencies in a spreadsheet of a spreadsheet editor. The computing device 200 may further be configured to host the spreadsheet editor. In other words, the same device can be configured to both host the spreadsheet editor and perform the method 100 as described herein. It is however to be noted that the steps and functions of the method 100 may be implemented as a separate module or engine (e.g. by a visualization and categorization module) from a module/engine configured to host the spreadsheet editor. In other words, the visualization and categorization module can be implemented as an add-in (or plug-in) to the spreadsheet editor.

The computing device 200 as described herein, refers to a computer system, or any device or general computing system configured to perform various functions. The computing device 200 may for instance refer to a personal computer, or laptop. Even though the computing device 200 is herein illustrated as one device, the computing device 200 may be a distributed computing system, formed by a number of different devices.

The computing device 200 comprises control circuitry 202. The control circuitry 202 may physically comprise one single circuitry device. Alternatively, the control circuitry 202 may be distributed over several circuitry devices.

As shown in the example of Fig. 2, the computing device 200 may further comprise a transceiver 206 and a memory 208. The control circuitry 202 being communicatively connected to the transceiver 206 and the memory 208. The control circuitry 202 may comprise a data bus, and the control circuitry 202 may communicate with the transceiver 206 and/or the memory 208 via the data bus.

The control circuitry 202 may be configured to carry out overall control of functions and operations of the computing device 200. The control circuitry 202 may include a processor 204, such as a central processing unit (CPU), microcontroller, or microprocessor. The processor 204 may be configured to execute program code stored in the memory 208, in order to carry out functions and operations of the computing device 200. The control circuitry 202 is configured to perform the steps of the method 100 as described above in connection with Fig. 1. The steps may be implemented in one or more functions stored in the memory 208.

The transceiver 206 is configured to enable the computing device 200 to communicate with other entities, such as other computing devices, data sources or data bases. The transceiver 206 may both transmit data from and receive data to the computing device 200.

The memory 208 may be a non-transitory computer-readable storage medium. The memory 208 may be one or more of a buffer, a flash memory, a hard drive, a removable media, a volatile memory, a non-volatile memory, a random-access memory (RAM), or another suitable device. In a typical arrangement, the memory 208 may include a non-volatile memory for long-term data storage and a volatile memory that functions as system memory for the computing device 200. The memory 208 may exchange data with the circuitry 202 over the data bus. Accompanying control lines and an address bus between the memory 208 and the circuitry 202 also may be present.

The computing device 200 may further comprise a display device 222. The display device 222 (or just display) may be arranged to display a graphical user interface to a user of the computing device 200. The display device 222 may be provided as an integrated part of the computing device 200. Alternatively, the display device 222 may be provided as an external (or stand-along) display, which is communicatively connected to the computing device 200 (e.g. to the control circuitry 202 of the computing device 200).

Functions and operations of the computing device 200 may be implemented in the form of executable logic routines (e.g., lines of code, software programs, etc.) that are stored on a non-transitory computer readable recording medium (e.g., the memory 208) of the computing device 200 and are executed by the circuitry 202 (e.g., using the processor 204). Put differently, when it is stated that the circuitry 202 is configured to execute a specific function, the processor 204 of the circuitry 202 may be configured execute program code portions stored on the memory 208, wherein the stored program code portions correspond to the specific function. Furthermore, the functions and operations of the circuitry 202 may be a stand-alone software application or form a part of a software application that carries out additional tasks related to the circuitry 202. The described functions and operations may be considered a method that the corresponding device is configured to carry out, such as the method 100 discussed above in connection with Fig. 1. In addition, while the described functions and operations may be implemented in software, such functionality may as well be carried out via dedicated hardware or firmware, or some combination of one or more of hardware, firmware, and software. In the following, the function and operations of the computing device 200 are described.

The control circuitry 202 is configured to, for each data sheet of the plurality of data sheets retrieve cell data associated with each of the plurality of cells of said data sheet. This may be performed e.g. by execution of a retrieving function 210.

The control circuitry 202 is further configured to process the cell data of at least a subset of the plurality of cells to identify data indicative of cross-sheet dependencies between said data sheet and any of the remaining data sheets. This may be performed e.g. by execution of a processing function 212.

The control circuitry 202 is further configured to attribute one of a set of predefined sheet categories to said data sheet, based on the identified data indicative of cross-sheet dependencies. This may be performed e.g. by execution of an attributing function 214.

The control circuitry 202 is further configured to display, via the display device 222, a graphical user interface comprising graphical elements representing the plurality of data sheets according to their respective attributed sheet category. This may be performed e.g. by execution of a displaying function 216.

The control circuitry 202 may be further configured to determine an importance score of each data sheet. This may be performed e.g. by execution of a determining function 218.

The control circuitry 202 may be further configured to update the graphical elements in response to modifications in the spreadsheets, so to reflect a change of sheet category of one of more data sheets of the plurality of data sheets. This may be performed e.g. by execution of an updating function 220.

It should be noted that the principles, features, aspects, and advantages of the method 100 as described above in connection with Fig. 1, are applicable also to the computing device 200 as described herein. To avoid undue repetition, reference is made to the above. Hence, the control circuitry may be configured to perform any of the steps as described as part of the method 100.

Figure 4 illustrates, by way of example, a graphical user interface 400, in accordance with some embodiments. The graphical user interface 400 may be displayed on the display device 202 of the computing device 200, as described above. The graphical user interface 400 can be seen as a map of the spreadsheet for which it is generated, visualizing the data flow and dependencies between the data sheets of the spreadsheet.

The illustrated example of Fig. 4 should be seen as a non-limiting example of the graphical elements visualized on the graphical user interface 400 as a result of the method 100 as described above. Any features or principles described herein are applicable to the method 100, and vice versa. It is to be appreciated that other ways of displaying the graphical user interface 400 are applicable as well.

In the illustrated example, the data flow and cross-sheet dependencies of a spreadsheet comprising ten data sheets (denoted Sheet 1 to Sheet 10) is shown. Each sheet is represented by a graphical element in the form of a box. As explained in the foregoing, the graphical elements representing the different sheets may indicate an importance score of each data sheet. In the illustrated example, the size of the different boxes are used to indicate this. As an example, Sheet 2 has a higher importance score than Sheet 5. This may e.g. be due to Sheet 2 having more cross-sheet dependencies to other data sheets, compared to Sheet 5. The higher importance score of Sheet 2 can be understood from the relative larger size of the graphical element representing Sheet 2, compared to the graphical element representing Sheet 5.

As explained in the foregoing, each data sheet can be assigned to a respective data sheet category. In the illustrated example, the graphical user interface 400 comprises a graphical element for the source sheet category 404, a graphical element for the analysis sheet category 406 and a graphical element for the output sheet category 408.

The sheets belonging to the source sheet category 404 (in this example Sheet 1 and Sheet 2) are then displayed within the graphical element for the source sheet category 404. Similarly, Sheet 2, Sheet 5,Sheet 6, and Sheet 10 are displayed within the graphical element for the analysis sheet category 406. Lastly, Sheet 4 and Sheet 9 are displayed within the graphical element for the output sheet category 408.

Optionally, the data sheets may further be categorized in the independent sheet category 410. In the illustrated example, Sheet 7 and Sheet 8 represent data sheets categorized under this sheet category.

The arrows 412 herein serve as graphical elements which represent the dependencies between data sheets, i.e. showing the links between two data sheets. The arrow may further indicate the direction of the link, i.e. in which direction the data flows. In the illustrated example, the arrow 412 between Sheet 1 and Sheet 2 is an outgoing link for Sheet 1, and an ingoing link for Sheet 2.

The graphical elements representing the data sheets may further indicate a sub-category attributed to said data sheet. As a non-limiting example, Sheet 1 is herein shown with a dotted fill-pattern to indicate that it is an external data source (i.e. having the sub-category external sheet). Moreover, Sheet 6 is herein shown with a striped fill-pattern to indicate that it is a hidden sheet (i.e. having the sub-category hidden sheet). Moreover, the presence of circular dataflow/dependencies may be shown, e.g. by arrows, or as some warning symbol.

The graphical elements representing the data sheets, the sheet categories and the links may be interactive elements. In other words, they may be clickable by a user interface to modify the displayed view, and/or show additional information. Thus, the graphical user interface 400 can be seen as an interactive map of the spreadsheet.

Even though the graphical user interface 400 is herein shown on its own, it may be displayed simultaneously as the spreadsheet 300 shown in Fig. 3, e.g. though a split view. This may enable the user to work in the spreadsheet simultaneously as viewing the data flow and dependencies generated by the disclosed technology.

It is to be noted that the graphical user interface 400 may include additional information as well, such as graphical elements highlighting potential errors or anomalies in the data sheets. As shown in the example, the graphical user interface 400 may a graphical element showing a header 414 with some statistics or general information about the spreadsheet. More specifically, it may show a number of errors detected in the spreadsheet, a number of risks identified within the spreadsheet, and/or a number of legacy formulas identified in the spreadsheet.

The technology disclosed has been presented above with reference to specific embodiments. However, other embodiments than the above described are possible and within the scope of the invention. Different method steps than those described above, performing the methods by hardware or software, may be provided within the scope of the invention. According to another exemplary embodiment a cloud computing system can be configured to perform any of the methods presented herein. The cloud computing system may comprise distributed cloud computing resources that jointly perform the methods presented herein under control of one or more computer program products.

It should be noted that any reference signs do not limit the scope of the claims, that the invention may be at least in part implemented by means of both hardware and software, and that the same item of hardware may represent several "means" or "units".

## Claims

1. A computer-implemented method (100) for visualizing data flow and sheet dependencies in a spreadsheet of a spreadsheet editor, wherein the spreadsheet comprises a plurality of data sheets, each data sheet comprising a plurality of cells arranged in a structured grid, the method (100) comprising the steps of:
for each data sheet of the plurality of data sheets:
retrieving (S102) cell data associated with each of the plurality of cells of said data sheet,
processing (S104) the cell data of at least a subset of the plurality of cells to identify data indicative of cross-sheet dependencies between said data sheet and any of the remaining data sheets; and
attributing (S106) one of a set of predefined sheet categories to said data sheet, based on the identified data indicative of cross-sheet dependencies; and
displaying (S110), via a display device, a graphical user interface comprising graphical elements representing the plurality of data sheets according to their respective attributed sheet category.

2. The method (100) according to claim 1, wherein processing (S104) the retrieved cell data comprises:
comparing (S104a) the cell data of each cell of the plurality of cells with a set of predefined data processing commands specific to the spreadsheet editor,
provided the cell data of a cell matches any predefined data processing command, attributing (S104b) a cell category associated with the matching data processing command to the cell of matching cell data, and
selecting (S104c) the subset of cells of the plurality of cells to be processed (S104), based on the attributed cell categories of each cell.

3. The method (100) according to claim 1 or 2, wherein the cross-sheet dependency of a present data sheet to another data sheet comprises a link between one or more cells of the present data sheet and one or more cells of another data sheet.

4. The method (100) according to claim 3, wherein the link is either an ingoing link in relation to the present data sheet, or an outgoing link in relation to the present data sheet.

5. The method (100) according to any one of the claims 1 to 4, wherein the set of predefined sheet categories comprises a source sheet category, an analysis sheet category, and an output sheet category.

6. The method (100) according to claim 5, when dependent on claim 4, wherein a data sheet is attributed (S106) the source sheet category provided that the data indicative of cross-sheet dependencies indicates solely outgoing links in said data sheet,
wherein a data sheet is attributed (S106) the output sheet category provided that the data indicative of cross-sheet dependencies indicates solely ingoing links in said data sheet, and
wherein a data sheet is attributed (S106) the analysis sheet category provided that the data indicative of cross-sheet dependencies indicates both ingoing links and outgoing links in said data sheet.

7. The method (100) according to claim 6, wherein the set of predefined sheet categories further comprises an independent sheet category, and
wherein a data sheet is attributed (S106) the independent sheet category provided that the data indicative of cross-sheet dependencies indicates no dependencies of said data sheet.

8. The method (100) according to any one of the claims 3 to 7, wherein the graphical elements further represent the links between the plurality of data sheets according to the data indicative of the data sheet dependencies.

9. The method (100) according to any one of the claims 1 to 8, further comprising updating (S112) the graphical elements in response to modifications in the spreadsheets, so to reflect a change of sheet category of one of more data sheets of the plurality of data sheets.

10. The method (100) according to any one of the claims 1 to 9, wherein the graphical user interface further comprises interactive elements enabling a user to explore data flow by selecting a data sheet or a link between two data sheets.

11. The method (100) according to any one of the claims 1 to 10, further comprising determining (S108) an importance score of each data sheet, and wherein the graphical elements further represent the importance score of each of the plurality of data sheets.

12. The method (100) according to any one of the claims 1 to 11, further comprising determining (S109) one or more sub-categories, for each data sheet of the plurality of data sheet, based on the cell data of the plurality of cells of the respective data sheet, and
wherein the graphical user interface further comprises graphical elements representing the sub-categories of each data sheet.

13. The method (100) according to any one of the claims 1 to 12, further comprising storing (S114) a snapshot of the spreadsheet comprising the data indicative of cross-sheet dependencies within the spreadsheet, in response to detecting modifications being made to the spreadsheets.

14. A computer program product comprising instructions, which when executed by a computing device, causes the computing device to carry out the method (100) according to any one of the claims 1 to 13.

15. A computing device for visualizing data flow and sheet dependencies in a spreadsheet of a spreadsheet editor, wherein the spreadsheet comprises a plurality of data sheets, each data sheet comprising a plurality of cells arranged in a structured grid, the computing device comprising control circuitry configured to:
for each data sheet of the plurality of data sheets:
retrieve cell data associated with each of the plurality of cells of said data sheet,
process the cell data of at least a subset of the plurality of cells to identify data indicative of cross-sheet dependencies between said data sheet and any of the remaining data sheets; and
attribute one of a set of predefined sheet categories to said data sheet, based on the identified data indicative of cross-sheet dependencies; and
display, via a display device, a graphical user interface comprising graphical elements representing the plurality of data sheets according to their respective attributed sheet category.
